# EUROPEAN PATENT APPLICATION

(11) **EP 2 127 837 A2**
(43) Date of publication of application: **02.12.2009**
(21) Application number: 09006993.1
(22) Date of filing: 26.05.2009
(51) Int. Cl.: B28D 1/04, B23D 47/04

(54) **Method and device for manufacturing tiles**

(30) Priority: 26.05.2008 SE 0801227
(71) Applicant: Hansson, Torgny, 312 31 Laholm (SE)
(72) Inventor: Hansson, Torgny, 312 31 Laholm (SE)
(74) Representative: Wallengren, Yngvar

(57) **Abstract**

A method for sawing bricks (1) into planar parallel tiles comprises the steps that the brick (1) is given a planar surface (2) which is secured to a number of alignment points (4) on a rotating rotor (3), the alignment points (4) moving in a diameter plane about the shaft (5) of the rotor. A number of saw blades (11-13) rotate about a shaft (8) parallel with the shaft (5) of the rotor (3) and are fed towards the brick (1), the positions of the saw blades (11-13) in relation to the plane of movement of the alignment points (4) being adapted to the desired tile thickness.

An apparatus for sawing bricks (1) into planar parallel tiles comprises a first shaft (5) with a rotor (3) with alignment points (4) to which the brick (1) is fixable, and a second shaft (8) parallel with the first shaft and displaying saw blades (11-13), the positions of the saw blades (11-13) along the second shaft (8) in relation to the alignment points (4) being adapted to the desired tile thickness, as well as a feeding device for feeding the shafts (5, 8) towards one another.

## Description

### TECHNICAL FIELD

The present invention relates to a method of manufacturing substantially planar parallel tiles departing from a continuous material piece which is sawn.

The present invention also relates to an apparatus for carrying the method into effect, the apparatus comprising at least one saw blade, a retainer member for the material piece and a feeder device for realising a relative feeding movement between the retainer member and the saw blade.

### BACKGROUND ART

In the manufacture of tiles or slabs for ground covering, floor laying or wall cladding, it is previously known, taking as a point of departure clay- or ceramic material in the wet state, to shape or press tiles which, after drying are fired to become more or less hard. Some type of glazing may possibly also be applied to the tiles.

Such tiles may display a good degree of mechanical strength and good resistance to freezing, but do not afford any major level of precision, since warping often occurs partly during the drying process but also during the firing process. Excessively large tolerances are thus a common occurrence in this type of tile.

In the laying of tiles or slabs of the above-outlined type, it is, because of the poor tolerances of the tiles, often necessary to retro grind a floor to the requisite smoothness and flatness. This is naturally both circumstantial and expensive, for which reason such a working operation is to be considered as a major drawback.

It is also previously known in the art to cut or dimension existing tiles by sawing, so that the cut pieces fit in, for example, a floor covering. Further, it is also previously known in the art, on the basis of larger, continuous material pieces, to produce smaller material pieces which may be employed in, for example, floor laying or wall cladding. However, this is a technique which is often defective both as regards precision but above all as regards production capacity, i.e. cost efficiency.

### PROBLEM STRUCTURE

The present invention has for its object to design the above-mentioned method and the above-mentioned apparatus such that the drawbacks inherent in the prior art technology are obviated. In particular, the present invention has for its object to realise the manufacture of tiles with a high degree of dimensional accuracy, a high production output capacity and, as a consequence, at competitive prices.

### SOLUTION

The objects forming the basis of the present invention will be attained regarding the method if the method is **characterised in that** the material piece is given a surface with a predetermined flatness or an almost planar surface is adjusted to the predetermined flatness, that the planar surface is aligned against a number of alignment points on a rotor and fixed there, that the rotor is caused to rotate, in which event the alignment points rotate in a diameter plane to the shaft of the rotor, that at least two saw blades are caused to rotate about a common shaft which is parallel with the shaft of the rotor, that the mutual distances between adjacent saw blades and the positions of the saw blades in relation to the plane of rotation of the alignment points are adapted to the desired tile thicknesses, and that the shafts of the rotor and the saw blades are moved towards one another in a relative feeding movement.

The objects forming the basis of the present invention will be attained regarding the apparatus if the apparatus is **characterised in that** the retainer member includes a rotor rotary about a shaft, with a number of alignment points for cooperation with a surface on the material piece of predetermined flatness, and with retainer means for fixedly retaining the material piece on the rotor in a position defined by the alignment points, at least two saw blades being mounted on a rotary shaft parallel with the shaft of the rotor with mutual spacing and spacing to the plane of rotation of the alignment points adapted to the desired tile thickness or thicknesses.

### BRIEF DESCRIPTION OF THE ACCOMPANYING DRAWINGS

The present invention will now be described in greater detail hereinbelow, with reference to the accompanying Drawings. In the accompanying Drawings:
- Fig. 1: schematically illustrates a front elevation of an apparatus according to the present invention; and
- Fig. 2: schematically illustrates a vertical side elevation of the apparatus according to Fig. 1.

### DESCRIPTION OF PREFERRED EMBODIMENT

The present invention will be described in greater detail hereinbelow in one embodiment where use is made of a brick as a continuous material piece from which the tiles are to be produced. However, it should be emphasised that the present invention may also be applied with major advantages to other types of material pieces, such as blocks of different masonry qualities, for example marble, slate, sandstone, but also harder stone qualities. Further, use may be made as starting material of blocks produced from composite materials based on a binder, such as a cement- or plastic-based binder and one or more fillers in the form of powder, particles or smaller material pieces.

Even if the brick employed in the embodiment affords major advantages in the form of easily handled and convenient dimensions of the thus produced tiles, it will be obvious to the skilled reader that both larger and smaller continuous material pieces may be employed, merely if the machine employed in manufacture may need to be scaled up or down, as required.

In both of the figures, the brick has been given reference numeral 1, and it is assumed that, right from the outset, it has a planar surface 2 of predetermined flatness. If no such planar surface of sufficient flatness were to exist on manufacture of the brick, one of the surfaces of the brick is adjusted so that this will obtain the required flatness. Such an adjustment may be put into effect in a grinding operation.

The planar surface 2 of the brick 1 is, according to the present invention, aligned by means of a number of alignment points 4 disposed on a rotor 3, and these alignment points may be defined by pins, projecting tips, stub shafts or the like. Suitably, the alignment points are three in number, since, applying this configuration, no tilting can occur between the planar surface 2 of the brick 1 and the above mentioned alignment points 4.

The rotor 3 displays means for positionally fixing and retaining the brick 1 in abutment against the alignment points 4. In one practical embodiment, such means for fixedly retaining the brick may comprise a sealing bead disposed on the rotor and defining a closed space between the planar surface 2 of the brick, the sealing bead and the rotor 3 proper. This sealed-off space is, by the intermediary of a suitable partial vacuum conduit, connected to a source of partial vacuum, so that the brick 1 may quite simply be held in position by suction in positionally aligned cooperation with the alignment points 4. Possibly, the rotor 3 may also be provided with mechanical guides in the form of guide heels, guide rails or the like so as to facilitate alignment of the brick 1 in relation to both the alignment points 4 and the sealing bead before connection to the source of partial vacuum is activated.

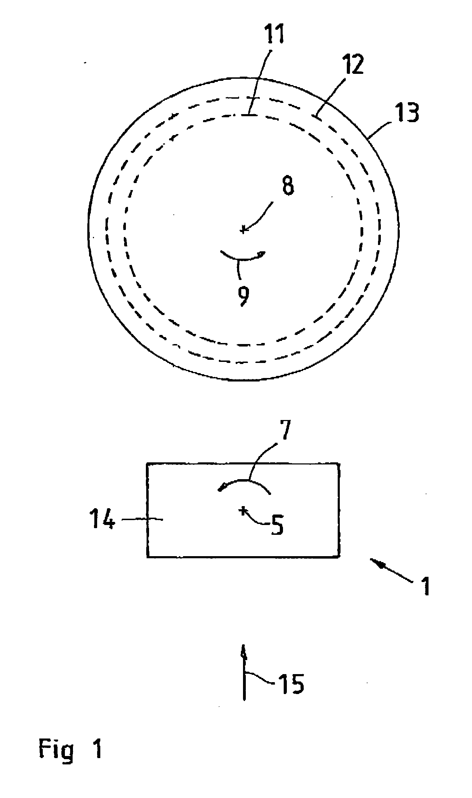

The rotor 3 has a shaft 5 which is rotatably journalled in a machine frame intimated by broken lines 6. Further, the shaft 5 is connected to drive means which is designed to impart to the rotor 5 and the brick 1 mounted thereon a rotational movement about the shaft, as intimated by means of the arrow 7 in Fig. 1.

With the above-selected terminology, the sealing bead, the alignment points 4, the rotor 3 and their connection to the source of partial vacuum may be summarised as a retainer member which, under reliable retention and accurate alignment of the brick 1, permits its rotation in accordance with the arrow 7.

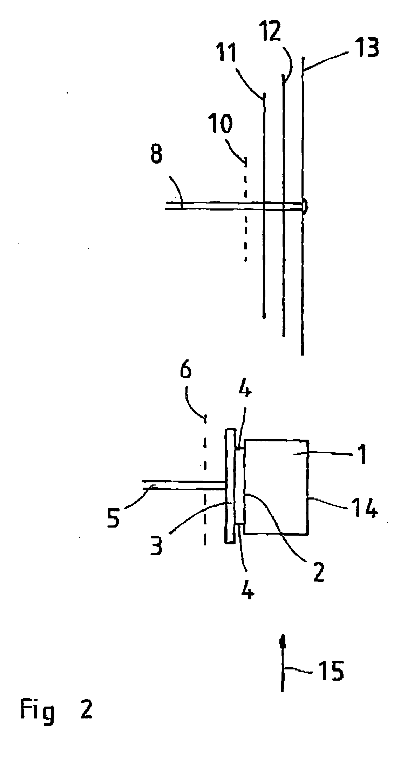

The apparatus according to the present invention includes a second rotary shaft 8 which is rotary as intimated by means of the arrow 9 in Fig. 1. Both of the shafts 5 and 8 are mutually parallel. The second shaft 8 is journalled in a machine frame 10, which is intimated by a broken line 10 in Fig. 2. Possibly, the machine frame intimated by the broken line 6 may be part of the machine frame intimated by the broken line 10, or vice versa, as will be described in greater detail hereinbelow.

The shaft 8 supports a number, at least two, of saw blades 11, 12 and 13. In such instance, the saw blade 11 is considered as the innermost, since it is positioned most proximal the machine frame 10, while the saw blade 13 is considered as the outermost, since it is mounted on the outermost part of the shaft 8.

The mutual spacing between the saw blades 11-13 (or possibly more saw blades if such is the case) is adapted in such a manner that it corresponds to the desired tile thickness of the tiles which are to be produced using the brick 1 as the starting material. Further, the distance from the innermost saw blade 11 to that plane of rotation which is generated by the abutment of the alignment points 4 against the planar surface 2 is in practice a diameter plane to the shaft 5, such that the distance corresponds to the desired tile thickness. If tiles of different thicknesses are desired from one and the same brick 1, the mutual spacing of the saw blades 11-13 is modified correspondingly, which also applies to the distance to the plane of rotation of the alignment points 4.

In one alternative embodiment, there may be mounted but a single saw blade on the shaft 8. In this alternative, either the saw blade is displaceable in the longitudinal direction of the shaft 8, or the rotor 3 is displaceable in the longitudinal direction of its shaft 5.

In the alternative entailing several saw blades 11-13 on a common shaft 8, these are fixedly mounted (during operation) on the shaft 8 with the aid of fixed spacers which guarantee both exact spacing between the saw blades and satisfactory mutual parallelism. The saw blades thus run in mutually parallel planes without wobbling and in diameter planes to the common shaft 8, which are also parallel with the plane of rotation of the alignment points 4.

In the alternative involving but a single saw blade on the shaft 8, the relative displacement between this saw blade and the rotor 3 is such that the plane of rotation of the saw blade is always parallel with the plane of rotation of the alignment points 4.

In the foregoing, it was assumed that the brick 1 had at least one planar surface 2 of a predetermined flatness. In the absence of such a surface, one surface on the brick must be adjusted, as was mentioned above. According to the present invention, the outer surface 14 of the brick need neither be completely planar nor even parallel with the planar surface 2 of the brick, since the outermost saw blade 13 will realise a planar surface on the outermost tile.

As was intimated above, both of the shafts 5 and 8 are suspended in such a manner in the machine frame that they may be set in a relative feeding movement, which takes place while maintaining parallelism between both of the shafts. Further, the shaft 5 of the rotor 3 is located beneath the shaft 8 of the saw blade or the saw blades 11-13. For this reason, the part of the overall machine frame intimated by reference numeral 6 may be movable towards and away from the shaft 8 precisely for executing the feeding movement. The feeding movement takes place according to the present invention suitably from beneath and upwards, towards the upper shaft 8, since with such an arrangement, tiles separated from the brick 1 by the saw blades can fall straight downwards without running the risk of being impeded by any machine components which are in motion. On the other hand, there may suitably be provided a chute, which, from a completely vertical drop direction of an individual tile, deviates this to a more horizontal direction, where the separated tile may be taken care of by some suitable form of conveyor.

According to the present invention, it is also possible to fixedly dispose the shaft 5 of the rotor 3 and instead cause the shaft 8 of the saw blade or the saw blades 11-13 to carry out the feeding movement.

As will be apparent from the Drawings, the outermost saw blade 13 is of greater diameter than the inner neighbouring saw blade 12, which in turn is of greater diameter than the innermost saw blade 11.

If, on rotation of both of the shafts 5 and 8, the feeding movement is initiated in accordance with the arrow 15, the corner areas of the rotating brick 1 will first come into contact with the outermost saw blade 13. Gradually as the feeding movement continues, the neighbouring saw blade 12 will subsequently come into contact with the corner areas of the brick, whereafter the innermost saw blade 11 comes into contact with the brick. When this latter contact has been established, thus between the innermost saw blade 11 and the brick, the outermost saw blade 13 will have already cut a considerable distance into the brick. When the feeding movement has continued so far that the periphery of the outermost saw blade is located at the shaft of rotation 5 of the brick 1, the brick will have obtained a planar surface which is parallel with the planar surface 2 of the brick, and which will constitute the outer face of the outermost tile. In this stage, there still remains an area of the brick about its rotation shaft 5, since the neighbouring saw blade 12 is of smaller diameter than the outermost blade.

When the centremost saw blade 12 has reached into the centre of rotation of the brick, the outermost tile falls down by force of gravity and is thereby completely separated. At this point in time, the innermost saw blade 11 has not yet reached into the centre of rotation of the brick, for which reason the next outermost tile is still connected with the remaining parts of the brick.

When the innermost saw blade 11 has also reached into the centre of rotation of the brick 1, the centrally located tile will also fall under the action of the force of gravity down to be caught by the chute and conveyed off. When this separation has been completed, the innermost tile is still in position aligned by the alignment points 4 and fixedly retained by the sealing bead and the partial vacuum. At this stage, a return movement is executed for the feeding, whereafter the innermost tile may be released by disconnection of the source of partial vacuum. Thereafter, the procedure is repeated with a new brick.

## Claims

1. A method of producing substantially planar parallel tiles starting from a continuous material piece (1) which is sawn, **characterised in that** the material piece (1) is given a surface (2) of predetermined flatness or an almost planar surface is adjusted to the predetermined flatness,
that the planar surface is aligned to a number of alignment points (4) on a rotor (3) and is secured there,
that the rotor is caused to rotate, the alignment points rotating in a diameter plane to the shaft (5) of the rotor,
that at least one saw blade (11-13) is caused to rotate about a shaft (8) which is parallel with the shaft of the rotor,
that the positions of the saw blade or the saw blades in relation to the plane of rotation of the alignment points are adapted to the desired tile thickness or thicknesses, and that the shafts of the rotor and the saw blade or the saw blades are moved towards one another in a relative feeding movement.

2. The method as claimed in Claim 1, **characterised in that** at least two saw blades (11-13) are caused to rotate about a common shaft (8).

3. The method as claimed in Claim 1 or 2, **characterised in that** the material piece (1) in its aligned position is sucked fast on the rotor (3).

4. The method as claimed in any of Claims 1 to 3, **characterised in that** the relative feeding movement is realised **in that** the shaft (5) of the rotor (3) is fed from beneath upwards towards the shaft (8) of the saw blades (11-13).

5. The method as claimed in any of Claims 1 to 3, **characterised in that** the relative feeding movement is realised **in that** the shaft (8) of the saw blade or the saw blades (11-13) is fed from above towards the shaft (5) of the rotor (3).

6. The method as claimed in any of Claims 2 to 5, **characterised in that** the outermost saw blade (13) cutting at greatest distance from the plane of rotation of the alignment points (4) is employed to impart a planar surface to the outermost tile located at the greatest distance from the plane of rotation of the alignment points.

7. The method as claimed in Claim 6, **characterised in that** the planar, outer surface of the outermost tile is finished before the outermost tile is wholly removed from the inwardly neighbouring tile or tiles.

8. The method as claimed in any of Claims 1 to 7, **characterised in that** the feeding movement is executed while maintaining parallelism between the shaft (5) of the rotor (3) and the shaft (8) of the saw blade or the saw blades (11-13).

9. An apparatus for manufacturing substantially planar parallel tiles starting from a continuous material piece (1), comprising at least one saw blade (11-13), a retainer member for the material piece and a feeding device for realising a relative feeding movement between the retainer member and the saw blades, **characterised in that** the retainer member includes a rotor (3) rotary about a shaft (5) and with a number of alignment points (4) for cooperation with a surface (2) located on the material piece (1) and displaying a predetermined flatness, and with retainer means for retaining the material piece on the rotor in a position defined by the alignment points, at least one saw blade (11-13) being mounted on a shaft (8) rotary in parallel with the shaft of the rotor, at a distance and spacing to the plane of rotation of the alignment points (4) adapted to the desired tile thickness or thicknesses.

10. The apparatus as claimed in Claim 9, **characterised in that** two or more saw blades (11-13) are disposed on a common shaft (8).

11. The apparatus as claimed in Claim 9 or 10, **characterised in that** the retainer member includes a seal disposed on the rotor (3) for sealing abutment against the surface (2) of the material piece (1) of predetermined flatness, and that the rotor has a connection to a source of partial vacuum, whereby the material piece may be sucked in place on the rotor.

12. The apparatus as claimed in any of Claims 9 to 11, **characterised in that** the feeding device is disposed, in the feeding movement (15), to bring the shaft (5) of the rotor (3) from beneath closer to the shaft (8) of the saw blade or the saw blades (11-13).

13. The apparatus as claimed in any of Claims 9 to 11, **characterised in that** the feeding device is disposed, in the feeding movement (15), to bring from above the shaft (8) of the saw blade or the saw blades (11-13) closer to the shaft (5) of the rotor (3).

14. The apparatus as claimed in any of Claims 10 to 13, **characterised in that** the outermost saw blade (13) cutting at the greatest distance from the plane of rotation of the alignment points (4) is of greater diameter than the neighbouring inner saw blade (12) which in turn is of greater diameter than its neighbouring inner saw blade (11), and so on.

15. The apparatus as claimed in any of Claims 9 to 14, **characterised in that** the feeding device is disposed to realise the feeding movement with maintained parallelism between the shaft (5) of the rotor (3) and the shaft (8) of the saw blade or the saw blades (11-13).
